(19) Europäisches Patentamt / European Patent Office / Office européen des brevets

(11) **EP 2 764 385 B1**

(12) **EUROPEAN PATENT SPECIFICATION**

(45) Date of publication and mention of the grant of the patent:
**09.12.2020 Bulletin 2020/50**

(21) Application number: **12838605.9**

(22) Date of filing: **09.10.2012**

(51) Int Cl.:
*G02B 6/14* (2006.01)   *G02B 6/02* (2006.01)

(86) International application number:
**PCT/US2012/059271**

(87) International publication number:
**WO 2013/052961 (11.04.2013 Gazette 2013/15)**

(54) **SYSTEMS AND TECHNIQUES FOR FABRICATING OPTICAL FIBER GRATINGS**

SYSTEME UND VERFAHREN ZUR HERSTELLUNG OPTISCHER FASERGITTER

SYSTÈMES ET TECHNIQUES DE FABRICATION DE RÉSEAUX DE FIBRES OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2011 US 201161543973 P**

(43) Date of publication of application:
**13.08.2014 Bulletin 2014/33**

(73) Proprietors:
• **OFS Fitel, LLC**
  **Norcross, GA 30071 (US)**
• **Gruner-Nielsen, Lars**
  **2700 Copenhagen (DK)**
• **Olsen, Jorgen Ostgaard**
  **2100 Copenhagen (DK)**

(72) Inventors:
• **GRUNER-NIELSEN, Lars**
  **2700 Bronshoj, Copenhagen (DK)**
• **OLSEN, Jorgen, Ostgaard**
  **2100 Copenhagen (DK)**

(74) Representative: **Zimmermann, Tankred Klaus et al**
**Schoppe, Zimmermann, Stöckeler Zinkler, Schenk & Partner mbB Patentanwälte**
**Radlkoferstrasse 2**
**81373 München (DE)**

(56) References cited:
| US-A- 4 494 969 | US-A- 6 018 840 |
| US-A1- 2004 033 023 | US-A1- 2004 052 459 |
| US-A1- 2005 191 014 | US-A1- 2008 169 537 |
| US-A1- 2008 285 907 | US-A1- 2008 285 907 |
| US-B1- 6 407 371 | US-B1- 7 336 872 |

• LI-YANG SHAO ET AL: "Long-period grating fabricated by periodically tapering standard single-mode fiber", APPLIED OPTICS, OPTICAL SOCIETY OF AMERICA, WASHINGTON, DC; US, vol. 47, no. 10, 1 April 2008 (2008-04-01) , pages 1549-1552, XP001513137, ISSN: 0003-6935, DOI: 10.1364/AO.47.001549
• XUAN H ET AL: "Long-period gratings in wavelentgh-scale microfibers", OPTICS LETTERS, OPTICAL SOCIETY OF AMERICA, vol. 35, no. 1, 1 January 2010 (2010-01-01), pages 85-87, XP001551121, ISSN: 0146-9592, DOI: 10.1364/OL.35.000085
• YAMASAKI S ET AL: "CHARACTERISTICS OF LONG-PERIOD FIBER GRATING UTILIZING PERIODIC STRESS RELAXATION", IEICE TRANSACTIONS ON ELECTRONICS, INSTITUTE OF ELECTRONICS, TOKYO, JP, vol. E83-C, no. 3, 3 March 2000 (2000-03-03), pages 440-443, XP000945864, ISSN: 0916-8524

## Description

### CROSS REFERENCE TO RELATED APPLICATION

The present application claims the priority benefit of U.S. Prov. Pat. App. No. 61/543,973, entitled "Modified Method for Making Long-Period Gratings in Optical Fibers using Electrical Resistive Heating," filed on October 6, 2011, which is owned by the assignee of the present application.

### BACKGROUND OF THE INVENTION

#### Field of the Invention

The present invention relates generally to optical fiber devices and methods and, in particular, to improved systems and techniques for fabricating optical fiber gratings with asymmetric perturbations.

#### Background Art

Mode-division-multiplexed transmission in few-moded fibers has recently attracted a lot of attention as a means of increasing the transmission capacity of a single fiber. The simplest few-moded fibers support two modes: the $LP_{01}$ mode and the $LP_{11}$ mode. If all the degenerations of these modes are used, these fibers will support the transmission of 6 channels.

A key component in a mode-division-multiplexing system is a mode converter, i.e., a device that provides efficient and stable conversion between waveguide modes. A mode converter can be implemented using a long-period grating (LPG), which is an optical fiber device comprising a periodic series of perturbations in the fiber's refractive index profile, geometry, or both.

A successful LPG design must satisfy a number of criteria. Of course, the LPG must efficiently produce the desired mode output from a given input. In addition, the LPG must also be stable over an extended period time, and should also display an acceptably low level of insertion loss. Other important factors are cost and ease of manufacture.

The article LI-YANG SHAO ET AL: "Long-period grating fabricated by periodically tapering standard single-mode fiber",APPLIED OPTICS, OPTICAL SOCIETY OF AMERICA, WASHINGTON, DC; US, vol. 47, no. 10, 1 April 2008 (2008-04-01), pages 1549-1552 and patent document US2008/0285907 both describe prior art methods for fabricating long period fiber gratings having symmetric notches induced by resistive heating elements.

Earlier techniques for fabricating LPGs typically fall short in meeting one or more of the above criteria, particularly with respect to provide mode conversion between a symmetric mode, such as the $LP_{01}$ mode, and an asymmetric and symmetric mode, such as the $LP_{11}$ mode. Thus, there exists a need for an improved method for fabricating successful optical gratings.

### SUMMARY OF THE INVENTION

Aspects of the invention are directed to systems and techniques for fabricating a long-period grating as defined in independent claims 7 and 1, respectively, that provide efficient and stable mode conversion between a symmetric waveguide mode and an asymmetric waveguide mode.

An aspect of the invention is directed to a technique for writing an optical device, such as a long period grating, into an optical fiber. There are provided a segment of optical fiber and a heating unit that includes a resistive heating element specifically configured to have a thickness that is smaller than a selected period for the optical device, wherein the resistive heating element creates a localized heating zone having a width that is narrower than the selected device period, and wherein applying heat causes a localized, rotationally asymmetric perturbation in the selected portion of the fiber segment.

The fiber segment is mounted so that a side surface of the fiber segment is proximate to a side surface of the resistive heating element. A translation stage is provided for at least one of the fiber segment and the heating element, such that a side surface of the fiber segment is axially translatable relative to the heating element. The fiber segment is positioned with respect to the resistive heating element such that a surface of a selected portion of the fiber segment is located in the heating zone of the resistive heating element. The temperature of the resistive heating element is selected so as to cause a rotationally asymmetric perturbation in the selected portion of the fiber segment.

Another aspect is directed to a technique for providing greater control in fabricating an LPG. The above technique is used to write a grating with an index contrast value that is higher than a selected optimum value. The heating element is then used to anneal both perturbed and unperturbed regions of the fiber segment so as to reduce the contrast value of the grating to the selected optimum value.

A further aspect of the invention is directed to a system for performing the above techniques.

## BRIEF DESCRIPTION OF THE DRAWINGS

FIGS. 1A and 1B show simplified scalar representations of the fundamental $LP_{01}$ mode and the higher-order $LP_{11}$ mode in an exemplary multimode fiber, and FIGS. 1C and 1D show graphs of the respective electric field intensity distributions for the two modes.

FIG. 2 shows a simplified diagram of a long-period grating.

FIGS. 3 and 4 are diagrams of mechanical gratings for fabricating a long-period grating.

FIG. 5 is a simplified diagram illustrating a setup according to an aspect of the invention for creating a localized, asymmetric index perturbation in an optical fiber segment.

FIG. 6 is a closeup side view, not drawn to scale, of the heating element and a portion of the fiber segment shown in FIG. 5.

FIG. 7 is a further side view of a portion of the fiber segment FIG. 5, illustrating changes to the heated portion of the fiber segment.

FIGS. 8-11 are diagrams illustrating a number of different configurations for the resistive heating element according to further aspects of the invention.

FIG. 12 shows a diagram of an assembly, in accordance with a further aspect of the invention, for controlling the axial movement of a fiber segment relative to a heating element, so as to fabricate a series of asymmetric perturbations in the fiber segment.

FIG. 13 A shows a diagram of a complete mode converter.

FIGS. 13B and 14 show diagrams of two testing setups that were used to quantify the performance of an LPG fabricated according to aspects of the invention.

FIG. 15 and FIGS. 16A-16E show transmission spectra obtained using the testing setup shown in FIG. 13B that illustrate the improved stability of an LPG fabricated according to the present invention compared with an LPG fabricated using a mechanical grating.

FIG. 17 is a graph illustrating mode beating amplitude as a function of group delay, as calculated from an $S^2$ measurement conducted using the testing setup shown in FIG. 14.

FIG. 18 is a graph illustrating the agreement between the calculated multipath interference and the transmission spectrum of an LPG fabricated according to aspects of the present invention.

FIG. 19 is a graph illustrating the relationship between heating time and perturbation state in an LPG fabricated according to aspects of the present invention.

FIG. 20 is a graph illustrating the decrease in perturbation contrast resulting from the application of an annealing technique to a long-period grating in accordance with a further aspect of the invention.

FIGS. 21A-21F show a series of $LP_{01}$-to-$LP_{01}$ transmission spectra for a long-period grating subjected to a series of five annealing passes.

FIGS. 22 and 23 are flowcharts of general techniques according to an aspect of the invention.

## DETAILED DESCRIPTION

Aspects of the invention are directed to systems and techniques for configuring and fabricating a long-period grating (LPG) to provide mode conversion between a symmetric input mode and an asymmetric output mode. The present invention is described in the context of providing mode conversion between the symmetric $LP_{01}$ mode and the asymmetric $LP_{11}$ mode in a few-mode fiber (FMF). It will be appreciated that these techniques are also applicable in other contexts to provide mode conversion between other pairs of input and output modes for other types of fibers.

According to an aspect of the invention, a resistive heating element is used to create a series of asymmetric perturbations in a segment of optical fiber. As discussed below, these perturbations can be in the refractive index, in the fiber geometry, or both. A further aspect of the invention is directed to a post writing annealing technique that provides more precise control of circularly asymmetric index perturbations.

Using the described systems and techniques, it has been possible to demonstrate good stability compared to traditional, mechanically-fabricated long period gratings, as well as high coupling efficiency and low insertion loss.

As used herein, the adjectives "symmetric" and "asymmetric" refer to circular symmetry, unless stated otherwise. Thus, as used herein, the term "symmetric mode" (refers to a waveguide mode having an electric field distribution that displays circular (or axial) symmetry in the transverse plane, i.e., symmetry around a point in the transverse plane that is independent of rotational angle. A symmetric mode will have the same appearance at all angles of rotation around a center point (i.e., the origin). As further used herein, the term "asymmetric mode" refers to a waveguide mode that does not display circular symmetry, irrespective of any other types of symmetry that may be present.

A typical optical fiber supports the propagation of light in one or more linear polarization modes $LP_{lm}$, where 1 and m are integers indicating, respectively, the number of azimuthal nodes and the number of radial nodes in the mode's transverse intensity distribution.

Generally speaking, an $LP_{lm}$ mode is symmetric if the mode has zero azimuthal nodes and one or more radial nodes, i.e., if l=0 and m≥1. Thus, the fundamental $LP_{01}$ mode and the higher order $LP_{02}$ and $LP_{03}$ modes are all examples of symmetric modes. An LP mode is circularly asymmetric if it has one or more azimuthal nodes, i.e., if l≥1. Thus, the higher-order $LP_{11}$, $LP_{21}$, and $LP_{31}$ modes are all examples of asymmetric modes.

Certain optical fiber applications require the conversion of a symmetric mode input into an asymmetric mode output. For example, one recently developed mode-division multiplexing (MDM) system requires a symmetric $LP_{01}$ mode input to be converted into an asymmetric $LP_{11}$ mode output.

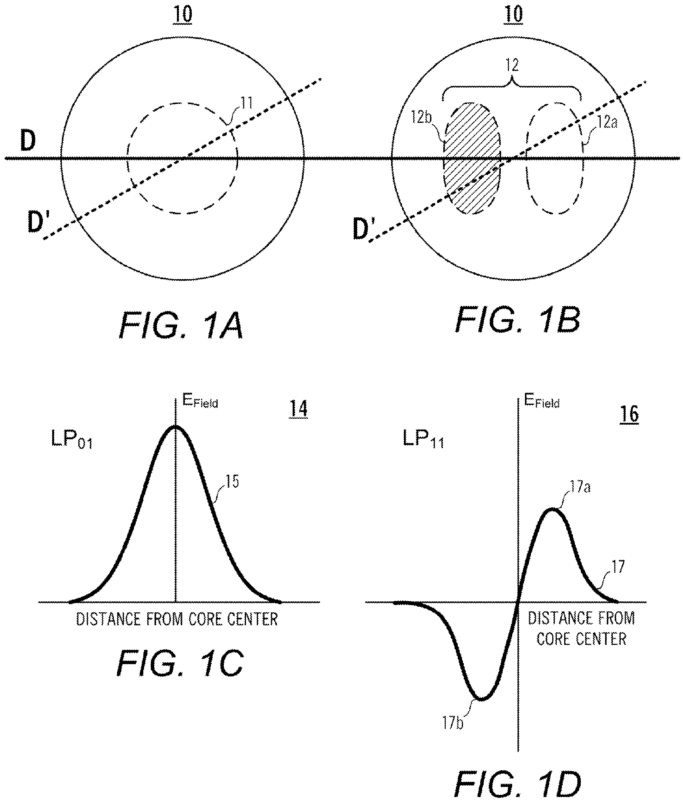

FIGS. 1A and 1B show, respectively, simplified diagrams of a cross section of an exemplary multimode fiber 10, in which there are depicted simplified scalar representations 11, 12 of the respective intensities of the fundamental $LP_{01}$ mode and the higher-order $LP_{11}$ mode. FIGS. 1C and 1D show graphs 14 and 16 of the respective electric field distributions 15, 17 for the $LP_{01}$ and $LP_{11}$ modes across fiber diameter D.

It will be seen in FIG. 1C that the $LP_{01}$ electric field distribution 17 has a substantially Gaussian shape. In FIG. 1D, on the other hand, it will be seen that the $LP_{11}$ electric field distribution has a non-Gaussian shape, comprising two oppositely signed peaks 17a, 17b corresponding to lobes 12a, 12b in FIG. 1B. (Lobe 12b is cross-hatched to indicate its negative value.)

It will be apparent from FIGS. 1A and 1C that the electric field distribution of the $LP_{01}$ mode is circularly symmetric, because the $LP_{01}$ mode presents the same electric field distribution across all diameters, irrespective of angular orientation (e.g., across diameter D'). It will further be apparent from FIGS. 1B and 1C that the electric field distribution of the $LP_{11}$ mode is not circularly symmetric, because the $LP_{11}$ mode presents different electric field distributions across diameters having different angular orientations (e.g., across diameter D').

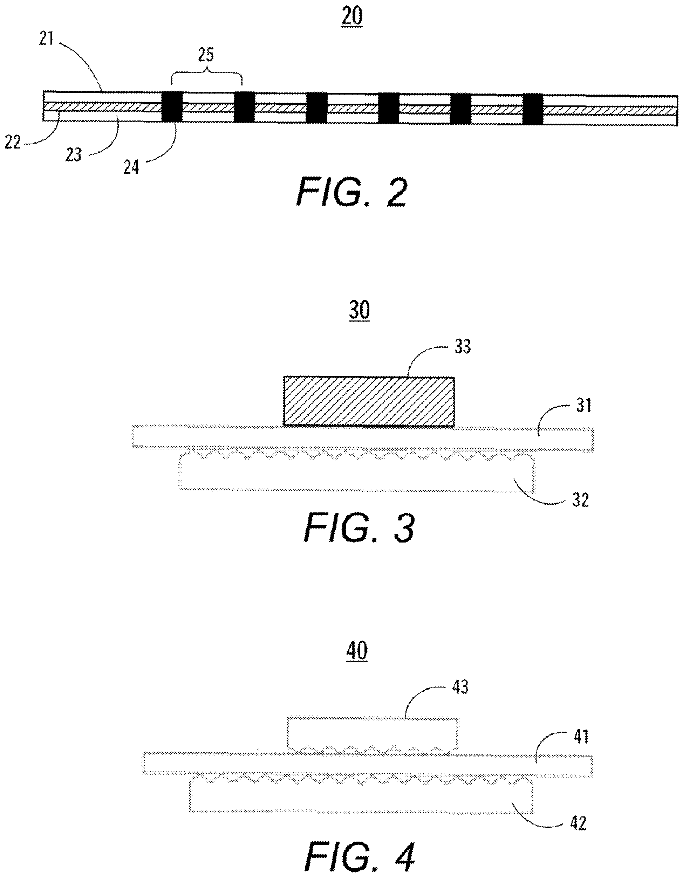

One device that is commonly used to provide mode conversion is a long-period grating (LPG). FIG. 2 shows a simplified diagram of an exemplary LPG 20, not drawn to scale, that is configured to provide mode conversion between a selected input mode and a selected output mode. LPG 20 comprises a segment of optical fiber 21 having a a core 22 and cladding 23, the optical fiber segment 21 configured to support the propagation of both the input mode and the output mode. The LPG further comprises a series of index perturbations 24, having a center-to-center spacing 25 that defines the grating period.

Generally speaking, LP modes are orthogonal and thus, in the absence of perturbations, do not interact with each other. The periodic perturbations in LPG 24 are configured to produce a scattering of an input mode. At least some of the scattered light is phase-matched with a selected output mode, resulting in excitation of the output mode.

The conversion efficiency of an LPG is given by

$$\frac{p_{lm}^{out}}{p_{01}^{in}} = \frac{\sin^2\left(\kappa L \sqrt{1+(\frac{\delta}{\kappa})^2}\right)}{1+(\frac{\delta}{\kappa})^2}, \text{ where } \delta = \frac{1}{2}\left[\frac{2\pi}{\lambda}\left(n_{01}^{eff} - n_{lm}^{eff}\right) - \frac{2\pi}{\Lambda}\right], \qquad \text{Eq. (1)}$$

Here:

    is the $LP_{01}$ power at the input of the LPG;
    is the power in $LP_{lm}$ at the output of the LPG;
    L is the length of the LPG;
    $\lambda$ is the wavelength;
    is the effective index of the $LP_{01}$ mode;
    is the effective index of the $LP_{lm}$ mode;
    is the grating period; and

$\kappa$ is the coupling coefficient given by:

$$\kappa \sim \frac{1}{\lambda} \int_0^{2\pi} \int_0^\infty E_{01} E_{lm} p(r,\phi) r dr d\phi, \qquad \text{Eq. (2)}$$

where

$E_{01}$ is the electric field distribution of the $LP_{01}$ mode;
$E_{lm}$ is the electric field distribution of the $LP_{lm}$ mode; and
$p(r,\phi)$ is the perturbation function.

From Eq. (2), it follows that in order to achieve efficient coupling between $LP_{01}$ and an asymmetric mode, such as $LP_{11}$, an asymmetric perturbation is needed. (Without an asymmetric perturbation, Eq. (2) would result in a value for $\kappa$ of 0.) The need for an asymmetric perturbation can be understood intuitively by returning to FIGS. 1C and 1D, discussed above, which illustrate the respective electric field distributions 15, 17 of the $LP_{01}$ and $LP_{11}$ modes. Coupling to the $LP_{11}$ mode requires the transfer of energy to both the positive and negative portions of the $LP_{11}$ electric field distribution 17. However, the $LP_{01}$ electric field distribution 15 has only positive values. Coupling the $LP_{01}$ mode to the $LP_{11}$ mode in the absence of an asymmetric perturbation is impossible because it would require, in essence, that only positive values be multiplied together to generate both positive and negative values. An asymmetric perturbation can be conceptualized as introducing a negative component into the mode coupling function.

An asymmetrically perturbed LPG can be created in a number of different ways. FIG. 3 is a diagram of an LPG 30, in which asymmetric perturbations are created by pressing a fiber segment 31 between a grating 32 and a rubber block 33. By varying the angle between fiber 31 and grating 32, the deformation period can be tuned. However, due to the viscoelastic nature of the rubber block 33, the fiber deformations are not stable over time.

FIG. 4 is a diagram of an LPG 40 in which asymmetric perturbations are created by pressing a fiber segment 41 between a first mechanical grating 42 and a second mechanical grating 43. While LPG 40 (FIG. 4) displays improved stability compared with LPG 30 (FIG. 3), LPG 40 also lacks stability over time. One reason for the lack of stability is the fiber's viscoelastic coating. Stability could possibly be improved by removing the coating from the fiber, but this is not a durable solution from a reliability point of view.

Improved stability can be achieved by permanently writing perturbations directly into a fiber segment, compared to creating them by mechanically pressing or indenting a fiber segment as discussed above. In addition, such an LPG has a significantly smaller size. One way to create an asymmetric perturbation in a fiber segment is by using a $CO_2$ laser to apply heat from one side. However, such a technique requires the use of expensive equipment that potentially presents a hazard to workers.

According to an aspect of the invention, a resistive heating element (i.e., a filament or strip of material that emits heat when conducting electricity) is used to apply heat to a series of locations along one side of an optical fiber segment, so as to create a periodic series of asymmetric perturbations in the fiber.

The perturbations are configured in accordance with equations (1) and (2), above, so as to provide mode coupling between a symmetric mode and an asymmetric mode. A resistive heating element is simpler and significantly cheaper than a $CO_2$ laser, and is also significantly safer to operate. Like perturbations written using a $CO_2$ laser, the perturbations created using the techniques described herein are permanent, and thus result in LPGs that are significantly more stable than LPGs created using mechanical methods.

It is noted that a technique for using a resistive heating element to fabricate an LPG is described in U.S. Patent No. 7,486,858, which is owned by the assignee of the present application. However, according to the technique described therein, a fiber segment is threaded through a hole in the resistive heating element. The perturbation that results is symmetric. Thus, as set forth in equation (2), discussed above, the technique described in U.S. Patent No. 7,486,858 is not suitable for fabricating a mode converter between a symmetric mode and an asymmetric mode.

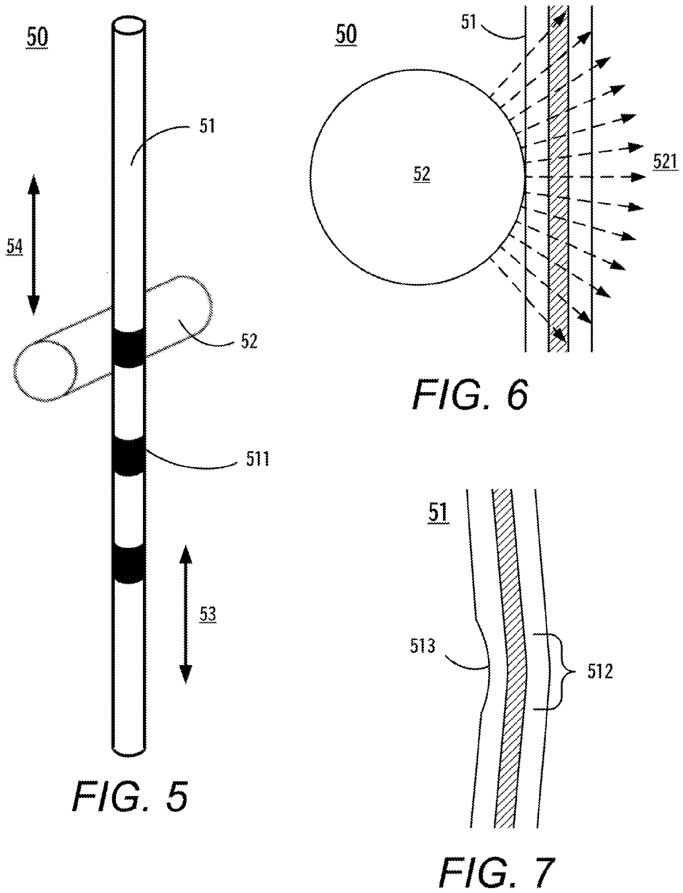

FIG. 5 is a simplified diagram illustrating a setup 50 according to an aspect of the invention for creating localized perturbations 511 in an optical fiber segment 51. The setup comprises a resistive heating element 52, fabricated from a suitable material such as Kanthal (FeCrAl) or platinum. In the present example, the resistive heating element is a wire having a cylindrical shape, i.e., a circular outer profile. However, the invention may also be practiced using a heating element having different shapes.

Setup 50 is configured to allow a fiber segment 51 to be positioned along one side of the heating element 52, such that the fiber 51 and the heating element 52 are substantially perpendicular to each other and are sufficiently close together, or abutting each other. This allows for the heat from the heating element 52 causes an asymmetric perturbation in the fiber segment 51 at a series of selected axial locations 511.

Setup 50 is further configured to allow for controlled movement of either the fiber segment or the heating element, or both, relative to each other, thereby allowing the heating element 52 to be moved to each perturbation site 511. This controlled movement may, for example, provide an upward and/or downward movement of the fiber segment 51 relative to the heating element 52, represented by double-headed arrow 53, or an upward or downward movement of the heating element 52 relative to the fiber segment 51, represented by arrow 54, or some combination thereof. During the movement, the fiber is kept straight without twisting.

The described relative movement can be accomplished, for example, by creating a stationary mount for the heating element 52 and a translational mount for the fiber segment 51. Alternatively, the fiber can be provided with a stationary mount, and the heating element can be provided with a translational mount. It would also be possible for both the heating element and the fiber segment to be provided with translational mounts.

The perturbations are spaced apart in accordance with the selected grating period. The resistive heating element has a width or thickness that is less than the grating period, and, thus, generates a heating region that is narrower than the grating period. The amount of heat should be sufficiently high to achieve the desired result. For example, temperatures of approximately 1,500°C or higher will typically be required in order to create a localized softening in an exemplary silica optical fiber. A somewhat lower temperature, estimated to be in the range of 1,000°C to 1,100°C, may be sufficient to release stresses in the fiber.

It is noted that, as a practical matter, it is typically not necessary to know the exact temperatures for the resistive heating element. The various parameters used in the grating fabrication process can be determined empirically, through trial and error. The temperatures set forth herein are intended to provide guidance as to the type of equipment and materials that can suitably be used to implement practices of the invention, and to provide a general idea as to possible starting points in the development of a set of fabrication parameters for a given application.

It is further noted that an optical fiber is typically provided with a protective outer coating. In practicing the described techniques, it is contemplated that the outer coating may be removed prior to heating.

FIGS. 6 and 7 are simplified diagrams, not drawn to scale, that illustrate how the described heating technique can create an asymmetric perturbation in refractive index, an asymmetric perturbation in fiber geometry, or a combination thereof.

FIG. 6 is a closeup side view of system 50, not drawn to scale, showing the heating element 52, which abuts the fiber segment 51, creating a heating zone 521, in which heat is applied asymmetrically to a local portion of fiber segment 51. It would also be possible for the heating element 52 to be proximate to fiber segment 51, rather than abutting it. In that case, other structures may be required to ensure precise positioning of the fiber segment 51 within the heating zone 521.

The temperature of the heating element is sufficient to result in a local softening of the fiber segment. In the examples described herein, the heating element reached temperatures estimated to be in the range of 1,400°C to 1,600°C. FIG. 7 is a further side view, not drawn to scale, after heating has been completed, illustrating changes to the heated portion of the fiber segment.

The application of heat to the fiber segment 511 causes two things to happen, each of which results in an asymmetric perturbation in the heated fiber region, as shown in FIG. 7.

First, heat applied by the resistive heater 52 causes an asymmetric relaxation of the draw-induced stresses in the heated fiber region, and which results in a slight asymmetric increase 512 in the length of the core in the heated region, as shown in FIG. 7. Because of the elasto-optic effect, differences in stresses and core length results in perturbation of the refractive index profile. Because the differences in stresses and core length are asymmetric, the resulting perturbation is also asymmetric.

Second, also shown in FIG. 7, the heat applied by the resistive heating element 52 causes a notch 513 to be melted into the fiber segment 54 at the point of contact, thereby significantly reducing the cladding diameter. Because notch 62 is asymmetric, the perturbation resulting from notch 62 is also asymmetric.

Thus, the described heating technique can be used to create an asymmetric perturbation either in the core refractive index or in the fiber geometry, or a combination thereof.

According to an aspect of the invention, the resistive heating element 52 is implemented using a length of material fabricated from a resistive material able to retain its structural integrity when operating at a temperature sufficient to soften a local portion of an optical fiber. As mentioned above, such materials include, for example, platinum and Kanthal (FeCrAl), which are able to withstand temperatures on the order of 1,000°C or greater. As further mentioned above, in the present examples the resistive heating element 52 is implemented using a wire with a circular outer profile. However, it would also be possible to use a differently-shaped resistive element, including a strip or plate.

In the presently described examples, the resistive heating element is provided by a length of platinum wire. The diameter of the heating element should be less than the selected grating period. As discussed below, satisfactory results were obtained using a platinum wire having a diameter of 0.5mm to fabricate a grating having a period of 1.17mm. It was also possible to make a LPG using a Kanthal filament with a dimension of 1.25mm x 0.15mm. Platinum seems preferable due to the ability to withstand higher temperatures than Kanthal.

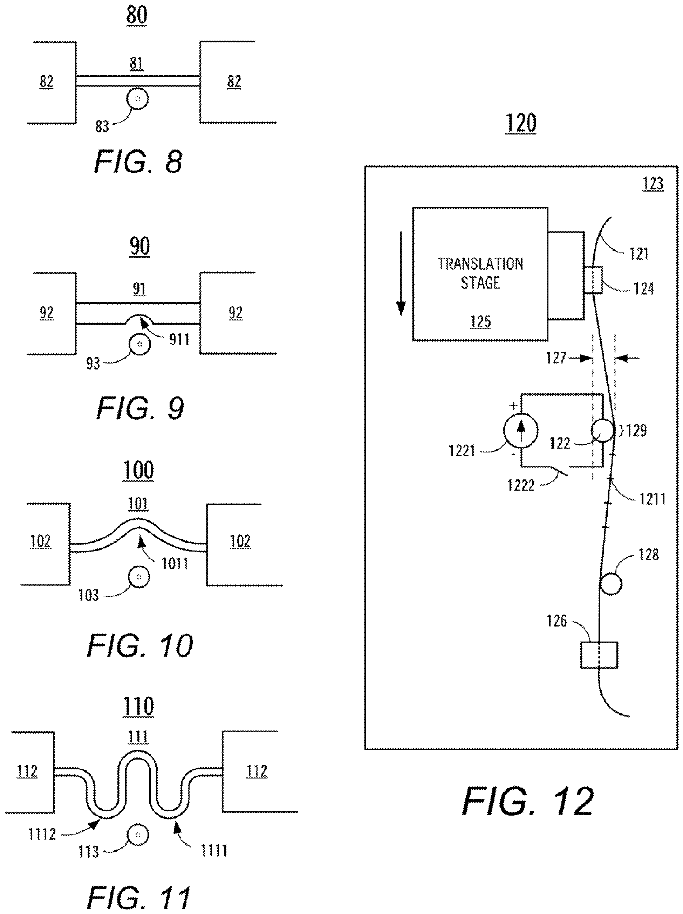

FIGS. 8-11 are simplified diagrams of a number of different configurations for the resistive heating element according to further aspects of the invention.

FIG. 8 shows a basic configuration 80, in which a straight platinum wire 81 is connected between a pair of electrode blocks 82. Alternatively, a Kanthal heating filament can be connected between the electrode blocks 82 in place of platinum wire 81.

FIG. 9 shows a second configuration 90, which a Kanthal heating filament 91 is connected between a pair of electrode blocks 92. A notch 911 has been cut into one side of the heating filament 91 in order to provide a guiding track for the optical fiber 93 to be thermally treated.

FIG. 10 shows a third configuration 100, in which a platinum wire 101 has been connected between the electrode blocks 102. The wire 101 has been bent into a curved shape to provide guidance for the optical fiber segment 103.

FIG. 11 shows a fourth configuration 110, in which a platinum wire 111 has been connected between the electrode blocks 112. The wire has been bent into a "W" shape that is configured to accommodate thermal expansion of wire 111 during heat treatment. When current is applied to the wire 111 it expands in length while the electrode blocks 112 remain stationary. In the configuration shown in FIG. 10, the thermal expansion of wire 101 will typically result in movement of the contact point between the fiber 103 and wire 101. In the "W" shape configuration of wire 111 (FIG. 11) the bends 1111 and 1112 can accommodate the extra length, and thus maintain a more stable contact point between fiber 113 and wire 111 and consequently a more constant heat transfer from wire 111 to fiber 113.

FIG. 12 shows a diagram of an assembly 120, in accordance with a further aspect of the invention, for controlling the axial movement of a fiber segment 121 relative to a heating element 122, so as to fabricate a series of asymmetric perturbations 1211 in the fiber segment.

In assembly 120, chassis 123 provides a structural foundation of the other assembly components.

Heating element 122 is represented in side view and may be implemented one of the heating element configurations illustrated in FIG. 8-11. In the depicted example, heating element 122 is connected to a pair of electrode blocks (not shown) that are connected to a current source 1221 controlled by a suitable switch 1222.

The tail end of fiber segment 121 is held by a fiber clamp 124 that is mounted to a translation stage 125 that is translatable in an up-down direction. A small weight 126 is attached to the lead end of the fiber segment.

The heating element 122 is positioned under the fiber clamp 124, such that the weighted fiber is displaced from vertical by an offset 127. A guide roller 128 is positioned under the fiber clamp and the heating element such that the pull on the fiber by the attached weight caused the heated portion 129 of the fiber segment to be gently pressed against the heating element 124.

Once the fiber has been loaded, switch 1222 is closed, and a portion of the fiber is heated for a selected amount of time. The switch is then opened, and the translation stage is used to lower the fiber by a selected distance, i.e., the grating period. The process is repeated until the desired number of grating perturbations has been created.

It is also possible for switch 1222 to remain closed for the entire inscription process. In that case, after each individual perturbation has been inscribed, the fiber is quickly advanced to the next perturbation site. It is noted that this is the technique that was used to fabricate the exemplary gratings described herein. Care must be taken to ensure that excessive heat is not applied to any of the perturbation sites, and that no perturbations are introduced into the fiber segment portions in between the perturbation sites.

Weight 126 causes the fiber 121 to be pressed against the heating element 122 with a constant force, insuring adequate thermal contact that is stable throughout the fabrication process. Good results were obtained using a weight of 2.5 g.

Tests were conducted of LPGs fabricated according to aspects of the invention, including tests comparing these LPGs with LPGs fabricated using other techniques.

The tested grating was constructed as follows:
The fiber used was a few-mode fiber (FMF) having a core diameter of 19 $\mu$m and having only two guided modes: the $LP_{01}$ mode and the $LP_{11}$ mode. A platinum wire with a diameter of 0.5 mm was used as the resistive heating element. The 0.5mm diameter platinum wire creates a heating region that is narrower than the grating period. The amount of heat generated was sufficient to create a localized softening of the optical fiber, and is estimated to have a temperature in the range of 1,400°C to 1,600°C.

The platinum wire heating element was formed into a W-shape and connected between a pair of electrodes in accordance with the practice of the invention illustrated in FIG. 11, discussed above. The movement of the fiber segment relative to the heating element was controlled using an assembly of the type illustrated in FIG. 12. The current through the platinum wire was 11 A. The fiber was kept still for 8 sec and the moved to next position in 0.2 sec. The period was 1.17 mm. 9 periods were made corresponding to a grating length of 10.5 mm.

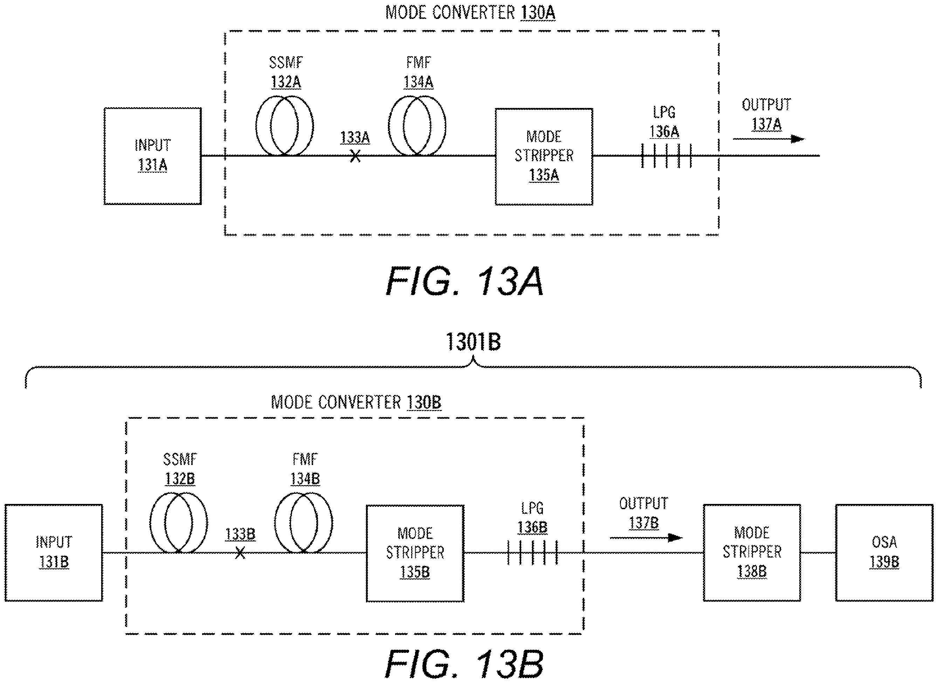

An LPG fabricated in accordance with the above-described techniques was assembled into a complete mode converter 130A illustrated in FIG. 13A.

Mode converter 130A provides $LP_{01}$-to-$LP_{11}$ mode conversion for laser light emitted by input 131A, and comprises the following elements: a length of a standard single-mode fiber (SSMF) 132A having an input end connected to input 131A; a length of a few-mode fiber (FMF) 134A having an input end connected at splice 133A to the output end of SSMF 132A; a mode stripper 135A having an input end connected to the output end of FMF 134A; and an LPG 136A fabricated according to the above-described techniques, having an input end connected to the output end of FMF 134A. The mode converter output 137A is emitted from the output end of LPG 136A.

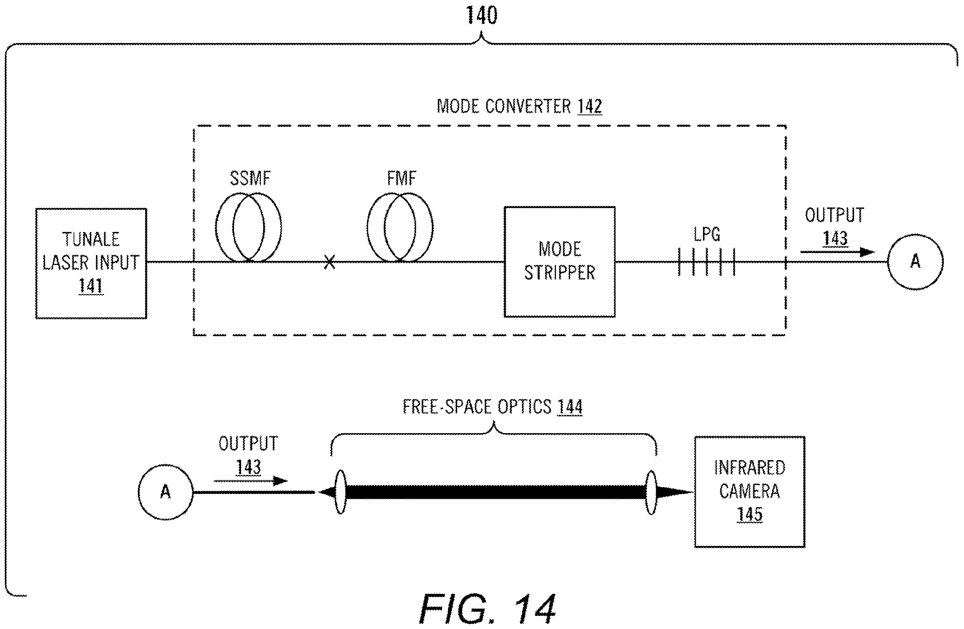

FIGS. 13B and 14 show diagrams of two testing setups 1301B and 140 that were used to quantify the performance of LPG mode converters fabricated in accordance with aspects of the invention.

In FIG. 13B testing setup 1301B comprises a mode converter 130B with elements 132B-136B corresponding to components 132A-136A of the mode converter 130A shown in FIG. 13A, including an LPG 136B fabricated in accordance with the above-described techniques.

Mode converter 130b receives broad bandwidth light from input 131B, and provides a mode-converted output 137B to mode stripper 138B, which is connected to optical spectrum analyzer (OSA) 139B. The mode properties of LPG 136B are isolated by mode strippers 135B and 138B.

In the FIG. 14, testing setup 140 comprises a tunable laser input 141 that launches a tunable input light into a mode converter 142 corresponding to mode converters 130A and 130B, as shown in FIGS. 13A and 13B. The mode converter output 143 is provided as a beam output 143 into free-space optics 144. The output of the free-space optics 144 is then focused onto an infrared camera 145.

It is noted that testing setup 140 is a modified version of an imaging system and technique described in U.S. Patent No.7,817,258, which is owned by the assignee of the present application. The imaging system and technique are referred to herein as "S$^2$ imaging," which is an abbreviation for "spatially and spectrally resolved imaging." S$^2$ imaging proved to be an effective and fast tool for characterization of the mode converters.

The insertion loss of the complete mode converter 130A shown in FIG 13A was measured to 0.47 dB. The variation in insertion loss between 1500 nm and 1620 nm was within the measurement uncertainty. The main contribution to the insertion loss is from the splice 133A between the SSMF and the few-mode fiber. In the test, the splice 133A was difficult to optimize due to the large difference in mode field diameter, at 1550 nm, from 10.5 $\mu$m for the SSMF to 14.9 $\mu$m for LP$_{01}$ of the two-moded fiber.

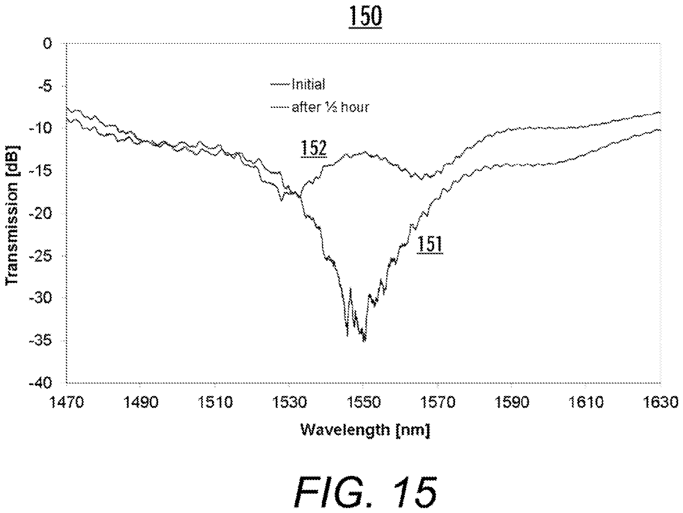

FIG. 15 shows a graph 150 of two LP$_{01}$-to-LP$_{01}$ transmission spectra 151 and 152 of a mechanically fabricated LPG of the type illustrated in FIG. 4. The spectra were generated using the testing setup 1301B (FIG. 13B). Spectrum 151 was recorded when the LPG was initially fabricated; spectrum 152 was recorded after 1/2 hour. The marked difference between the two spectra indicates the LPG's lack of stability.

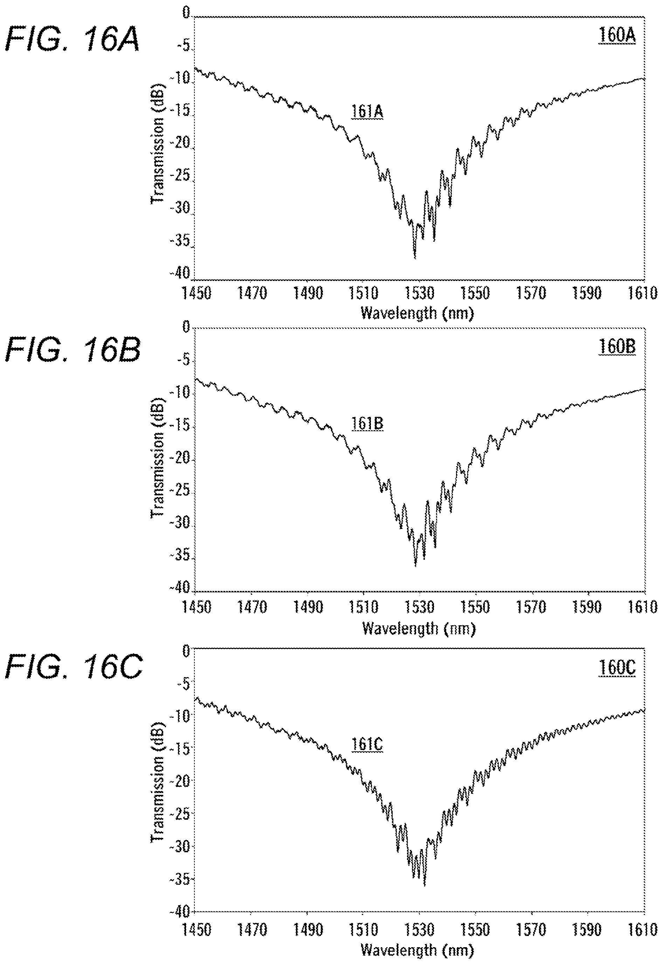

FIGS. 16A through 16C are a series of graphs 160A, 160B, 160C, showing respective plots 161A, 161B, 161C of three LP$_{01}$-to-LP$_{01}$ transmission spectra of an LPG fabricated in accordance with the present invention. The type of fiber and the testing setup were the same as those used to generate the spectra in FIG. 15. The heating element shown in FIG. 11, and the translation assembly shown in FIG. 12 were used to fabricate the LPG, which had a 10 perturbations (9 periods), and a perturbation period of 1.17 mm. Spectrum 161A (FIG. 16A) was recorded at the time of fabrication; spectrum 161B (FIG. 16B) was recorded after 16 hours; and spectrum 161C (FIG. 16C) was recorded after 64 hours.

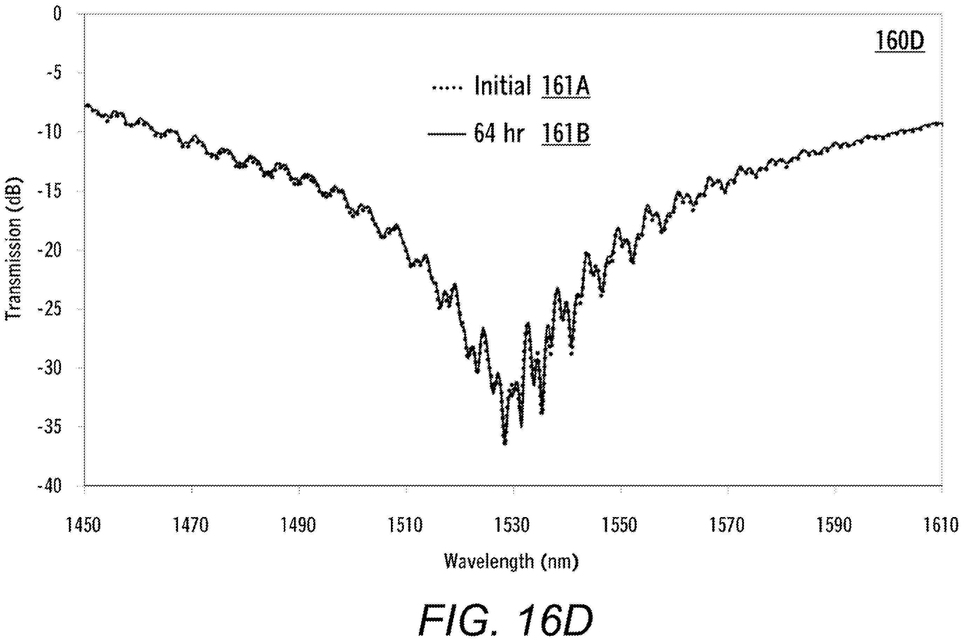

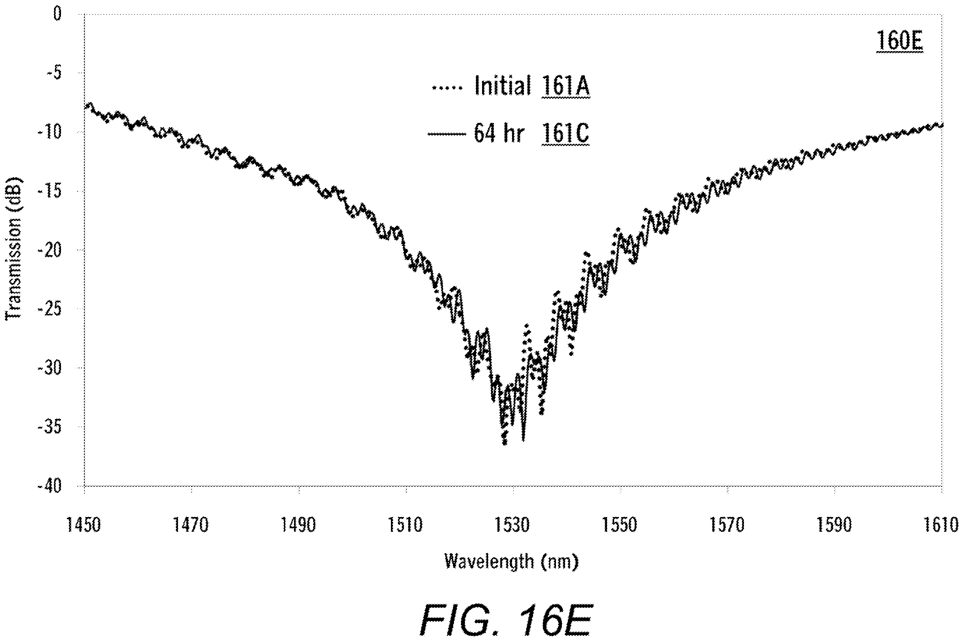

FIGS. 16D and 16E show graphs 160D and 160E that are provided in order to illustrate the closeness of spectra 161A, 161B, and 161C to each other, which demonstrates the stability of the LPG. In graph 160D (FIG. 16D), spectrum 161B (solid line) has been superimposed on top of spectrum 161A (dotted line), and illustrates how little the LP$_{01}$-to-LP$_{01}$ spectrum has changed between the time of fabrication and 16 hours later. In graph 160E (FIG. 16E), spectrum 161C (solid line) has been superimposed on top of spectrum 161A (dotted line), and illustrates how little the LP$_{01}$-to-LP$_{01}$ spectrum has changed between the time of fabrication and 64 hours later. Thus, both FIGS. 16D and 16E demonstrate the stability of the LPG created using the inventive methods.

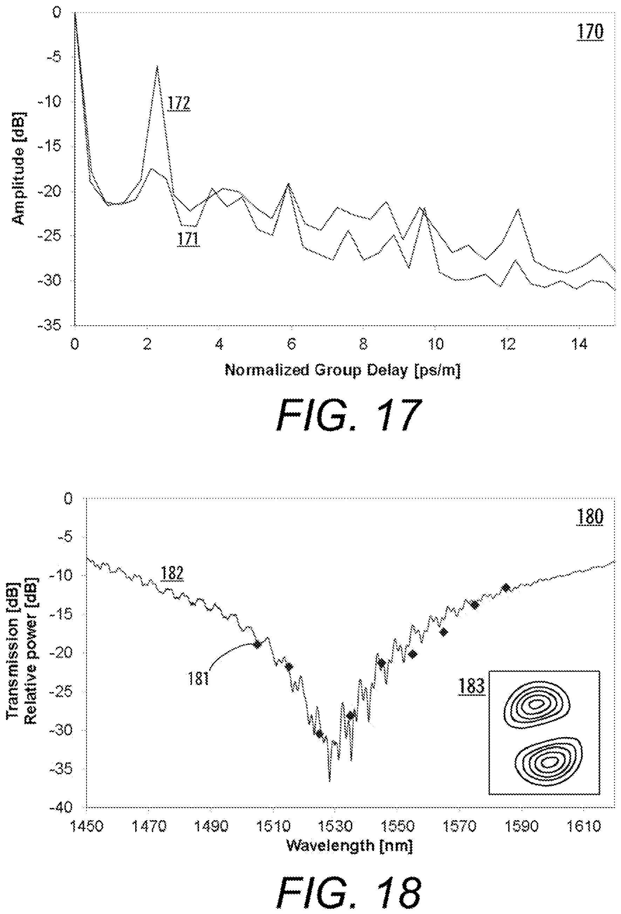

FIG. 17 is a graph 170 illustrating mode beating amplitude as a function of group delay at a first wavelength range, 1520 nm to 1530 nm (lower plot 171), and at a second wavelength range 1580 nm to 1590 nm (upper plot 172). Generally speaking, mode beating is a type of noise resulting from the interaction between modes. Thus, graph 170 illustrates the mode beating resulting from the interaction of the LP$_{01}$ and LP$_{11}$ modes created by an LPG.

The modified S$^2$ setup shown in FIG. 14 was used to generate graph 170. The modified S$^2$ setup allows for very fast measurements. Camera images corresponding to 100 wavelength points were taken in 22 seconds. Plots 171 and 172 are based on measured mode beating averaged over all camera pixels as a function of group delay difference, normalized to the fiber length.

Graph 17 shows a clear peak at 2.2 ps/m, corresponding to residual LP$_{01}$. It is also observed that this peak is much smaller in the 1520 nm to 1530 nm range (plot 171) than in the 1580 to 1590 nm range (plot 172). The remaining peaks in FIG. 17 result from noise due to weak reflections in the setup, leading to coupling into the camera.

FIG. 18 is a graph 180 illustrating the agreement between: (1) the calculated multipath interference (MPI) of the mode converter calculated from S$^2$ measurement (black diamonds 181); and (2) the transmission spectrum (plot 182) measured using the setup shown in FIG. 13B. Inset 183 shows a simplified line drawing of the measured mode pattern from the mode converter at 1525 nm.

The transmission spectrum was measured from LP$_{01}$-to-LP$_{01}$, with mode strippers on both sides of the LPG. The MPI of mode converter is calculated from the S$^2$ measurement, where MPI is defined as:

$$MPI = 10 \cdot \log\left(\frac{P_{par}}{P_{tot}}\right)$$

where

$P_{par}$ is power in the parasitic mode ($LP_{01}$ in this case); and
$P_{tot}$ is the total power.

In graph 180, the MPI 181 was calculated based on the results of $S^2$ scans conducted at intervals of 10 nm. Graph 180 shows a good agreement between the measured $LP_{01}$-to-$LP_{01}$ transmission spectrum (plot 182) and the calculated MPI (black diamonds 181). It has been observed that MPI is below -25 dB between 1520 nm and 1540 nm, and below -20 dB between 1510 nm and 1550 nm.

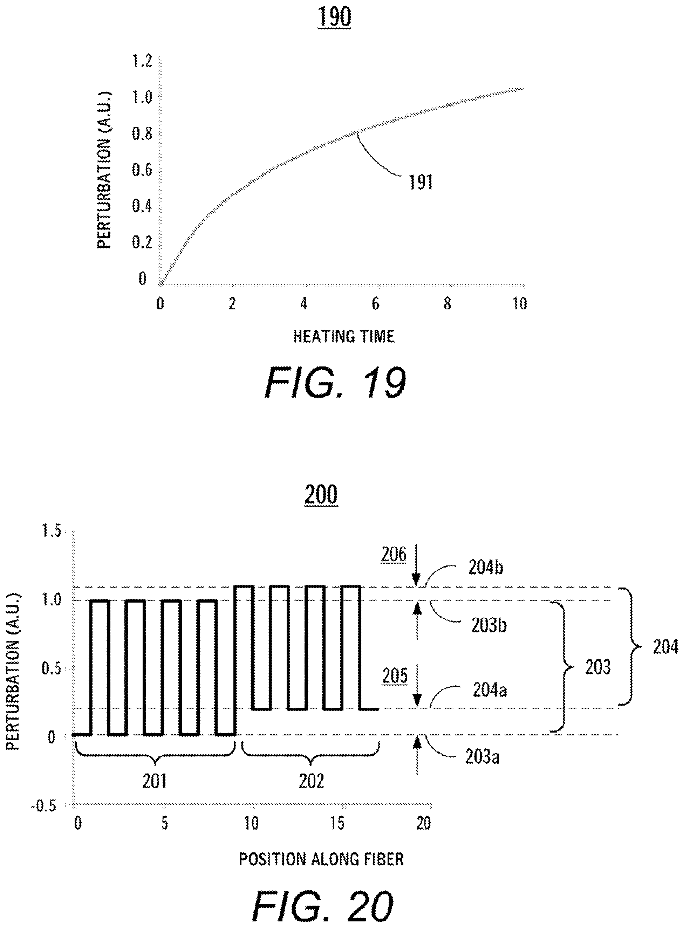

According to a further aspect of the invention, for easier and more precise control of index perturbations, an LPG is first fabricated with a greater perturbation than optimum. Subsequently, the LPG is annealed by passing the LPG multiple times by the heating element at a constant speed. The concept is illustrated in FIGS. 19-21.

FIG. 19 shows a graph 190 in which curve 191 depicts the relationship between heating time and perturbation. It will be seen that the ratio is non-linear. Additional heating time continues to produce an increase in perturbation, but the rate of increase decreases over time. Thus, in a post-writing annealing process, a fiber region that has already been perturbed will experience less change than the unperturbed part. The overall effect of annealing, therefore, is that the contrast of the grating pattern is weakened.

The weakening of the grating period is illustrated by plots 201 and 202 in the graph 200 shown in FIG. 20. The left plot 201 shows the pre-annealing index contrast 203 between the index of the initially non-perturbed fiber regions (indicated by broken line 203a) and the index perturbed fiber regions (indicated by broken line 203b). The right plot 202 shows the post-annealing index contrast 204 between the initially unperturbed regions 204a and the initially perturbed regions 204b.

As shown in graph 200, the annealing process increases the perturbation of the initially non-perturbed regions by an amount 205 that is greater than the amount 206 of the increase in perturbation of the initially perturbed regions. Thus, the annealed region has a lower index contrast than the annealed region.

A grating was made using a 0.5 mm platinum wire configured as shown in FIG. 11, and a translation assembly of the type shown in FIG. 12. The fiber used was that same as the one used in the other examples presented herein. The current through the platinum wire was 18.5 A. The fiber was kept still for 8 seconds and then moved to next position in 0.2 sec. The period was 1.14 mm. 5 periods where made corresponding to a grating length of 5.7 mm.

The grating was then annealed by passing the LPG by the heating wire with a speed of 1 mm/s and a current of 18.5A through the platinum wire. The annealing process was repeated multiple times.

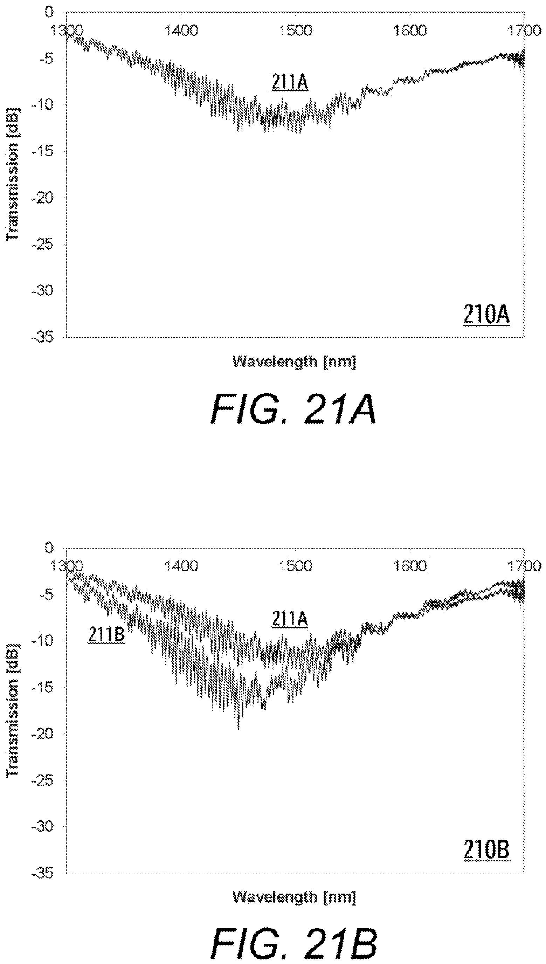

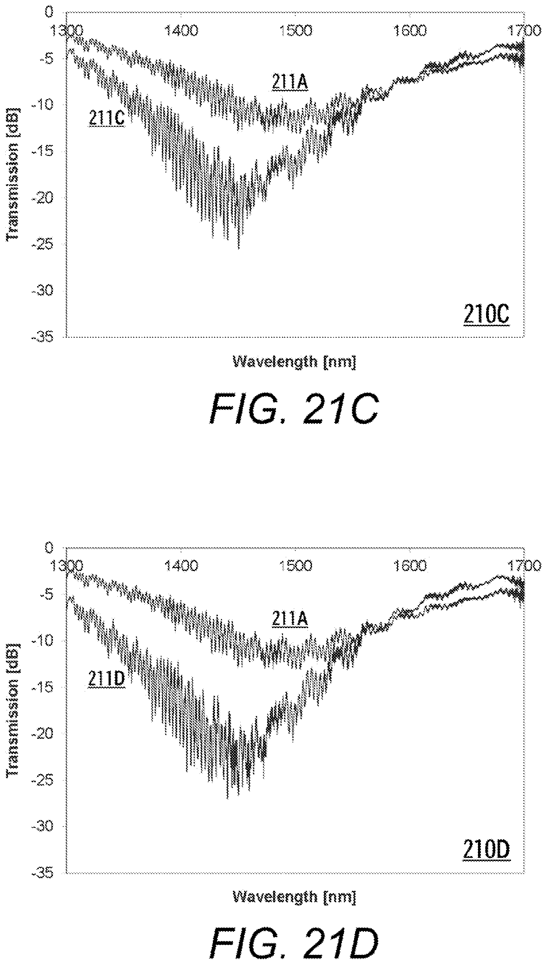

The transmission spectrum from $LP_{01}$-to-$LP_{01}$ was monitored during inscription and annealing using the testing setup shown in FIG. 13B. FIGS. 21A-21F are a series of graphs 210A-210F, showing the $LP_{01}$-to-$LP_{01}$ transmission spectra 211A-21 IF that were recorded after for each annealing pass. For convenient reference, the transmission spectrum after the first annealing pass 211A is repeated in FIGS. 21B-21F.

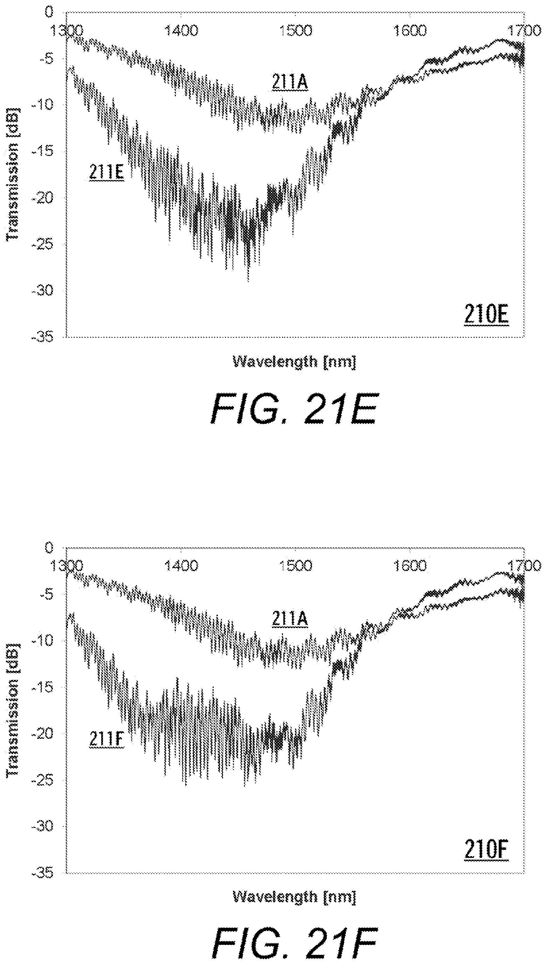

It was observed that, in the described practice of the invention, an optimum was reached after approximately five annealing passes. As can be seen in a visual comparison of FIGS. 21E and 21F, the sixth annealing pass results in a transmission spectrum 211F (FIG. 21F) that is noticeably flatter at ~ 1400-1500nm than the transmission spectrum 211E (FIG. 21E) recorded after the fifth annealing pass. In different situations, a different number of annealing passes, determined by trial and error, may be required to achieve an optimum result.

It will be appreciated that the described annealing technique is generally application for use with other systems and techniques for inscribing an LPG into an optical fiber. For example, the described annealing technique may be used in conjunction with the fabrication of symmetric gratings as described in U.S: Patent No. 7,486,858, or in conjunction with the fabrication of asymmetric gratings using a $CO_2$ laser. Generally speaking, the described anneal technique may be used in conjunction with all grating writing systems and techniques in which the perturbation-versus-time curve has a nonlinear relationship, as illustrated in FIG. 19, discussed above.

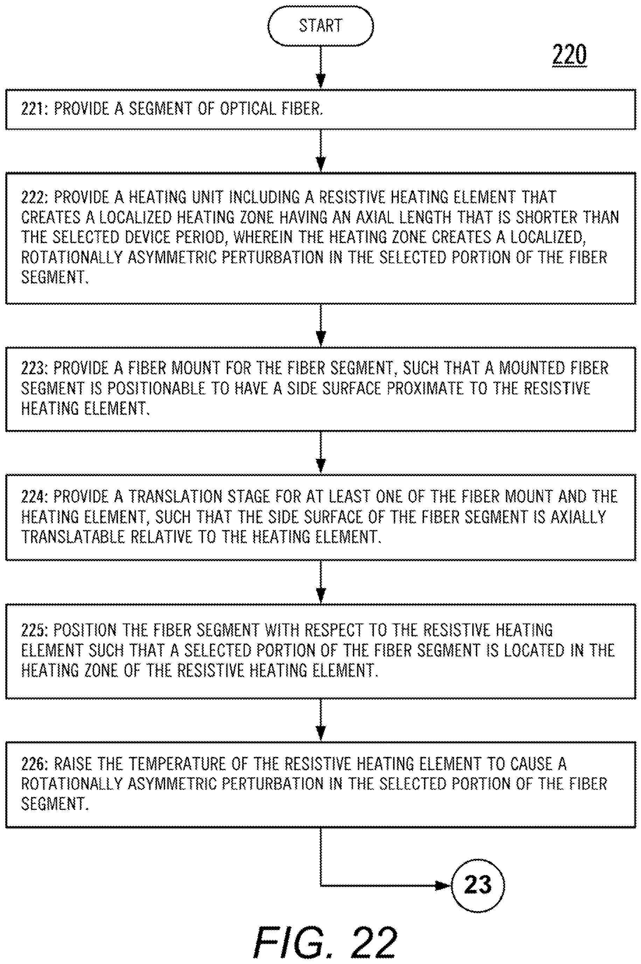

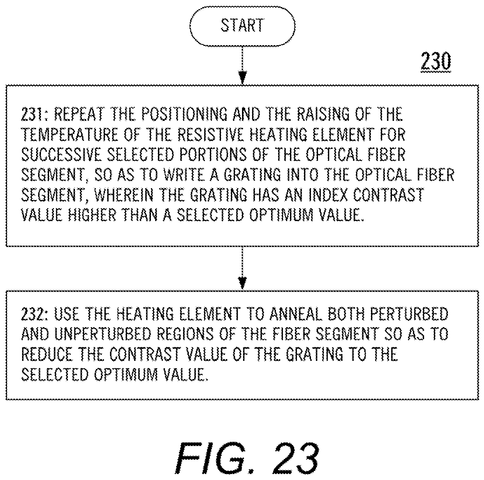

FIG. 22 shows a flowchart of a technique 220 for fabricating an LPG mode converter according to an aspect of the invention, and FIG. 23 shows a flowchart of an annealing technique 230 that can be performed in conjunction with technique 220.

It should be noted that FIGS. 22 and 23 are intended to be exemplary, rather than limiting. The present invention may be practiced in a number of different ways, using different combinations of some or all of the elements set forth in these drawings, as well as combinations including elements not explicitly set forth in these drawings. Further, the enumerated steps may be performed in a different order, or contemporaneously.

Technique 220 comprises the following steps:

221: Provide a segment of optical fiber.
222: Provide a heating unit including a resistive heating element that creates a localized heating zone having an axial length that is shorter than the selected device period, and that causes a localized, rotationally asymmetric perturbation in the selected portion of the fiber segment.

223: Mount the fiber segment so that a side surface of the fiber segment is proximate to a side surface of the resistive heating element;

224: Provide a translation stage for at least one of the fiber segment and the heating element, such that a side surface of the fiber segment is axially translatable relative to the heating element;

225: Position the fiber segment with respect to the resistive heating element such that a selected portion of the fiber segment is located in the heating zone of the resistive heating element.

226: Raise the temperature of the resistive heating element to cause a rotationally asymmetric perturbation in the selected portion of the fiber segment.

As set forth in in FIG. 9, technique 230 comprises the following steps that can be performed after step 226 of technique 220:

231: Repeat the positioning and the raising of the temperature of the resistive heating element for successive selected portions of the optical fiber segment, so as to write a grating into the optical fiber segment, while controlling the heating by the resistive heating element such that the grating is written with an index contrast value higher than a selected optimum value.

232: Use the heating element to anneal both perturbed and unperturbed regions of the fiber segment so as to reduce the contrast value of the grating to the selected optimum value.

It will be appreciated from the above described that the structures and techniques described herein provide a new and simple method for manufacturing of long period gratings based on thermal perturbation. In the described example, a practice of the invention was used to make an efficient and stable mode converter from $LP_{01}$ to $LP_{11}$. An insertion loss below 0.5 dB and MPI below -25 dB in a 20 nm range and bellow -20 dB between in a 40 nm range were obtained. Spatially and spectrally resolved imaging ("$S^2$ imaging") was used as an effective and fast tool for characterization of the mode converters.

While the foregoing description includes details which will enable those skilled in the art to practice the invention, it should be recognized that the description is illustrative in nature and that many modifications and variations thereof will be apparent to those skilled in the art having the benefit of these teachings. It is accordingly intended that the invention herein be defined solely by the claims appended hereto and that the claims be interpreted as broadly as permitted by the prior art.

## Claims

1. A method for writing a grating into an optical fiber, the method comprising:

(a) providing a segment of optical fiber (51);

(b) providing a resistive heating element (52) having a thickness less than the grating period, for creating a localized heating zone having an axial length that is shorter than the grating period;

(c) positioning the fiber segment (51) and the resistive heating element (52) with respect to each other such that a side surface of the fiber segment (51) abuts a side surface of the resistive heating element (52) at a contact point, and such that a selected portion (511) of the fiber segment (51) is located in the localized heating zone of the resistive heating element (52);

(d) raising the temperature of the resistive heating element (52) to cause an asymmetric notch (513) to be melted into the fiber segment (51) at the contact point and to cause a rotationally asymmetric perturbation (512) in the selected portion (511) of the fiber segment (51), wherein the heat applied by the resistive heating element (52) causes an asymmetric relaxation of draw-induced stresses in the heated fiber region, and wherein the rotationally asymmetric perturbation is configured so as to provide mode coupling between a symmetric mode and an asymmetric mode; and

(e) repeating steps (c) and (d) for successive selected portions (511) of the fiber segment (51) so as to write the grating into the fiber segment (51).

2. The method of claim 1, further comprising:
applying a controlled tension to the fiber segment (51) during the performance of steps (d) and (e).

3. The method of claim 1, wherein in step (b) the provided heating element (52) comprises a wire that is curved so as to guide movement of the fiber segment (51) relative to the heating element (52).

4. The method of claim 1, wherein in step (b) the provided heating element (52) comprises a wire configured in a W-shape, so as to accommodate thermal expansion of the wire as the wire temperature is raised.

5. The method of claim 1, wherein in step (b) the provided resistive heating element (52) comprises a filament, having a notch (513) therein for guiding the optical fiber segment (51).

6. The method of claim 1, wherein step (e) further includes:

repeating the positioning and the raising of the temperature of the resistive heating element (52) for successive selected portions (511) of the optical fiber segment (51), so as to write a grating into the optical fiber segment (51), while controlling the heating by the resistive heating element (52) such that the grating is written with an index contrast value higher than a selected optimum value;
using the heating element (52) to anneal both perturbed and unperturbed regions of the fiber segment (51) so as to reduce the contrast value of the grating to the selected optimum value; and
repeating the annealing of the perturbed and unperturbed regions of the fiber segment (51) until the contrast value of the grating is reduced to the selected optimum value.

7. A system for writing an optical device into an optical fiber, the system comprising:

a resistive heating assembly, including a chassis and a pair of electrode blocks mounted thereto, the resistive heating assembly further including a resistive heating element (52) mounted between the electrode blocks;
a mounting assembly for mounting a fiber segment (51) so that a side surface of the fiber segment (51) abuts a side surface of the resistive heating element (52) at a contact point,
wherein the resistive heating element (52) creates a localized heating zone having an axial length that is shorter than a selected device period that causes an asymmetric notch (513) to be melted into the fiber segment (51) at the contact point and that causes a localized, rotationally asymmetric perturbation (512) in the selected portion (511) of the fiber segment (51), wherein the heat applied by the resistive heating element (52) causes an asymmetric relaxation of draw-induced stresses in the heated fiber region, and wherein the rotationally asymmetric perturbation is configured so as to provide mode coupling between a symmetric mode and an asymmetric mode;
a translation assembly, including a translation stage for at least one of the fiber segment (51) and the heating element (52), such that a side surface of the fiber segment (51) is axially translatable relative to the heating element (52); and
a guide element for guiding the fiber.

8. The system of claim 7, further comprising:
a weight, attachable to the optical fiber, for pressing a surface of the optical fiber onto a surface of the heating element (52) with a constant force.

**Patentansprüche**

1. Ein Verfahren zum Schreiben eines Gitters in eine optische Faser, wobei das Verfahren folgende Schritte aufweist:

(a) Bereitstellen eines Segments einer optischen Faser (51);
(b) Bereitstellen eines Widerstandsheizelements (52) mit einer Dicke, die geringer als die Gitterkonstante ist, zum Erzeugen einer lokalisierten Heizzone mit einer axialen Länge, die kürzer als die Gitterkonstante ist;
(c) Positionieren des Fasersegments (51) und des Widerstandsheizelements (52) in Bezug zueinander, so dass eine Seitenoberfläche des Fasersegments (51) an einem Kontaktpunkt an eine Seitenoberfläche des Widerstandsheizelements (52) anstößt und ein ausgewählter Abschnitt (511) des Fasersegments (51) sich in der lokalisierten Heizzone des Widerstandsheizelements (52) befindet;
(d) Erhöhen der Temperatur des Widerstandsheizelements (52), um zu bewirken, dass eine asymmetrische Einkerbung (513) an dem Kontaktpunkt in das Fasersegment (51) geschmolzen wird, und um eine rotationsasymmetrische Perturbation (512) in dem ausgewählten Abschnitt (511) des Fasersegments (51) zu bewirken, wobei die durch das Widerstandsheizelement (52) aufgebrachte Hitze eine asymmetrische Entspannung von zuginduzierten Beanspruchungen in der erhitzten Faserregion bewirkt und wobei die rotationsasymmetrische Perturbation dahingehend ausgebildet ist, eine Modenkopplung zwischen einer symmetrischen Mode und einer asymmetrischen Mode bereitzustellen; und

(e) Wiederholen der Schritte (c) und (d) für aufeinanderfolgende ausgewählte Abschnitte (511) des Fasersegments (51), um das Gitter in das Fasersegment (51) zu schreiben.

2. Das Verfahren gemäß Anspruch 1, das ferner folgenden Schritt aufweist:
   Ausüben einer kontrollierten Spannung auf das Fasersegment (51) während der Durchführung der Schritte (d) und (e).

3. Das Verfahren gemäß Anspruch 1, bei dem in Schritt (b) das bereitgestellte Heizelement (52) einen Draht aufweist, der gekrümmt ist, um eine Bewegung des Fasersegments (51) relativ zu dem Heizelement (52) zu führen.

4. Das Verfahren gemäß Anspruch 1, bei dem in Schritt (b) das bereitgestellte Heizelement (52) einen Draht aufweist, der in einer W-Form ausgebildet ist, um eine Wärmeausdehnung des Drahts bei steigender Drahttemperatur aufzunehmen.

5. Das Verfahren gemäß Anspruch 1, bei dem in Schritt (b) das bereitgestellte Widerstandsheizelement (52) ein Filament mit einer Einkerbung (513) in demselben aufweist, um das optische Fasersegment (51) zu führen.

6. Das Verfahren gemäß Anspruch 1, bei dem Schritt (e) ferner Folgendes umfasst:

   Wiederholen der Positionierung und der Temperaturerhöhung des Widerstandsheizelements (52) für aufeinanderfolgende ausgewählte Abschnitte (511) des optischen Fasersegments (51), um ein Gitter in das optische Fasersegment (51) zu schreiben, während das Erhitzen durch das Widerstandsheizelement (52) derart gesteuert wird, dass das Gitter mit einem Indexkontrastwert, der höher als ein ausgewählter Optimalwert ist, geschrieben wird;
   Verwenden des Heizelements (52), um sowohl gestörte als auch ungestörte Regionen des Fasersegments (51) zu tempern, um den Kontrastwert des Gitters auf den ausgewählten Optimalwert zu reduzieren; und
   Wiederholen des Temperns der gestörten und ungestörten Regionen des Fasersegments (51), bis der Kontrastwert des Gitters auf den ausgewählten Optimalwert reduziert ist.

7. Ein System zum Schreiben einer optischen Vorrichtung in eine optische Faser, wobei das System folgende Merkmale aufweist:

   eine Widerstandsheizanordnung, die einen Hauptrahmen und ein Paar von Elektrodenblöcken umfasst, die auf demselben befestigt sind, wobei die Widerstandsheizanordnung ferner ein Widerstandsheizelement (52) umfasst, das zwischen den Elektrodenblöcken befestigt ist;
   eine Befestigungsanordnung zum Befestigen eines Fasersegments (51), so dass eine Seitenoberfläche des Fasersegments (51) an einem Kontaktpunkt an eine Seitenoberfläche des Widerstandsheizelements (52) anstößt,
   wobei das Widerstandsheizelement (52) eine lokalisierte Heizzone mit einer axialen Länge erzeugt, die kürzer als eine ausgewählte Vorrichtungsperiode ist, die bewirkt, dass eine asymmetrische Einkerbung (513) an dem Kontaktpunkt in das Fasersegment (51) geschmolzen wird, und die eine lokalisierte rotationsasymmetrische Perturbation (512) in dem ausgewählten Abschnitt (511) des Fasersegments (51) bewirkt, wobei die durch das Widerstandsheizelement (52) aufgebrachte Hitze eine asymmetrische Entspannung von zuginduzierten Beanspruchungen in der erhitzten Faserregion bewirkt und wobei die rotationsasymmetrische Perturbation dahingehend ausgebildet ist, eine Modenkopplung zwischen einer symmetrischen Mode und einer asymmetrischen Mode bereitzustellen;
   eine Translationsanordnung, die eine Translationsstufe für zumindest eines des Fasersegments (51) und des Heizelements (52) umfasst, so dass eine Seitenoberfläche des Fasersegments (51) relativ zu dem Heizelement (52) axial verschiebbar ist; und
   ein Führungselement zum Führen der Faser.

8. Das System gemäß Anspruch 1, das ferner folgendes Merkmal aufweist:
   ein Gewicht, das an der optischen Faser angebracht werden kann, um eine Oberfläche der optischen Faser mit konstanter Kraft auf eine Oberfläche des Heizelements (52) zu pressen.

**Revendications**

1. Procédé permettant d'écrire un réseau dans une fibre optique, le procédé comprenant le fait de:

    (a) prévoir un segment de fibre optique (51);
    (b) prévoir un élément chauffant résistif (52) présentant une épaisseur inférieure à la période de réseau, pour créer une zone de chauffage localisée présentant une longueur axiale qui est plus courte que la période de réseau;
    (c) positionner le segment de fibre (51) et l'élément chauffant résistif (52) l'un par rapport à l'autre de sorte qu'une surface latérale du segment de fibre (51) vienne en butée contre une surface latérale de l'élément chauffant résistif (52) en un point de contact, et de sorte qu'une partie sélectionnée (511) du segment de fibre (51) soit située dans la zone de chauffage localisée de l'élément chauffant résistif (52);
    (d) élever la température de l'élément chauffant résistif (52) pour amener une encoche asymétrique (513) à fondre dans le segment de fibre (51) au point de contact et pour provoquer une perturbation asymétrique de rotation (512) dans la partie sélectionnée (511) du segment de fibre (51), où la chaleur appliquée par l'élément chauffant résistif (52) provoque une relaxation asymétrique des contraintes induites par étirage dans la région de fibre chauffée, et où la perturbation asymétrique de rotation est configurée de manière à créer un couplage de mode entre un mode symétrique et un mode asymétrique; et
    (e) répéter les étapes (c) et (d) pour les parties sélectionnées successives (511) du segment de fibre (51) de manière à écrire le réseau dans le segment de fibre (51).

2. Procédé selon la revendication 1, comprenant par ailleurs le fait de:
    appliquer une tension contrôlée au segment de fibre (51) pendant la réalisation des étapes (d) et (e).

3. Procédé selon la revendication 1, dans lequel, à l'étape (b), l'élément chauffant prévu (52) comprend un fil qui est courbé de manière à guider le mouvement du segment de fibre (51) par rapport à l'élément chauffant (52).

4. Procédé selon la revendication 1, dans lequel, à l'étape (b), l'élément chauffant prévu (52) comprend un fil configuré en forme de "W", de manière à permettre la dilatation thermique du fil au fur et à mesure que la température du fil est élevée.

5. Procédé selon la revendication 1, dans lequel, à l'étape (b), l'élément chauffant résistif prévu (52) comprend un filament qui présente une encoche (513) destinée à guider le segment de fibre optique (51).

6. Procédé selon la revendication 1, dans lequel l'étape (e) comporte par ailleurs le fait de:

    répéter le positionnement et l'élévation de la température de l'élément chauffant résistif (52) pour les parties sélectionnées successives (511) du segment de fibre optique (51), de manière à écrire un réseau dans le segment de fibre optique (51), tout en contrôlant le chauffage par l'élément chauffant résistif (52) de sorte que le réseau soit écrit avec une valeur de contraste d'indice supérieure à une valeur optimale sélectionnée;
    utiliser l'élément chauffant (52) pour recuire les régions tant perturbées que non perturbées du segment de fibre (51) de manière à réduire la valeur de contraste du réseau à la valeur optimale sélectionnée; et
    répéter le fait de recuire les régions perturbées et non perturbées du segment de fibre (51) jusqu'à ce que la valeur de contraste du réseau soit réduite à la valeur optimale sélectionnée.

7. Système permettant d'écrire d'un dispositif optique dans une fibre optique, le système comprenant:

    un ensemble de chauffage résistif, comportant un châssis et une paire de blocs d'électrodes y montés, l'ensemble de chauffage résistif comportant par ailleurs un élément de chauffage résistif (52) monté entre les blocs d'électrodes;
    un ensemble de montage destiné à monter un segment de fibre (51) de sorte qu'une surface latérale du segment de fibre (51) vienne en butée contre une surface latérale de l'élément chauffant résistif (52) en un point de contact, dans lequel l'élément chauffant résistif (52) crée une zone de chauffage localisée présentant une longueur axiale qui est plus courte qu'une période de dispositif sélectionnée qui amène une encoche asymétrique (513) à être fondue dans le segment de fibre (51) au point de contact et qui provoque une perturbation asymétrique de rotation localisée (512) dans la partie sélectionnée (511) du segment de fibre (51), dans lequel la chaleur appliquée par l'élément chauffant résistif (52) provoque une relaxation asymétrique des contraintes induites par étirage dans la région de fibre chauffée, et dans lequel la perturbation asymétrique de rotation est configurée de manière à créer un couplage de mode entre un mode symétrique et un mode asymétrique;
un ensemble de translation, comportant un étage de translation pour au moins l'un parmi le segment de fibre (51) et l'élément chauffant (52), de sorte qu'une surface latérale du segment de fibre (51) puisse être déplacée axialement en translation par rapport à l'élément chauffant (52); et
un élément de guidage destiné à guider la fibre.

8. Système selon la revendication 7, comprenant par ailleurs:
un poids, pouvant être fixé à la fibre optique, destiné à presser une surface de la fibre optique contre une surface de l'élément chauffant (52) avec une force constante.

*FIG. 1A*

*FIG. 1B*

*FIG. 1C*

*FIG. 1D*

<u>20</u>

FIG. 2

<u>30</u>

FIG. 3

<u>40</u>

FIG. 4

FIG. 5

FIG. 6

FIG. 7

**80**

**FIG. 8**

**90**

**FIG. 9**

**100**

**FIG. 10**

**110**

**FIG. 11**

**120**

TRANSLATION STAGE

**FIG. 12**

MODE CONVERTER <u>130A</u>

SSMF
<u>132A</u>

FMF
<u>134A</u>

LPG
<u>136A</u>

OUTPUT
<u>137A</u>

INPUT
<u>131A</u>

<u>133A</u>

MODE
STRIPPER
<u>135A</u>

## FIG. 13A

1301B

MODE CONVERTER <u>130B</u>

SSMF
<u>132B</u>

FMF
<u>134B</u>

LPG
<u>136B</u>

OUTPUT
<u>137B</u>

INPUT
<u>131B</u>

<u>133B</u>

MODE
STRIPPER
<u>135B</u>

MODE
STRIPPER
<u>138B</u>

OSA
<u>139B</u>

## FIG. 13B

EP 2 764 385 B1

140

MODE CONVERTER 142

SSMF          FMF

| TUNALE LASER INPUT 141 | → SSMF × FMF | MODE STRIPPER | LPG | OUTPUT 143 → | A |

FREE-SPACE OPTICS 144

| A | OUTPUT 143 → | ←▬▬▬▬→ | INFRARED CAMERA 145 |

*FIG. 14*

FIG. 15

FIG. 16A

FIG. 16B

FIG. 16C

*FIG. 16D*

EP 2 764 385 B1

160E

..... Initial 161A

—— 64 hr 161C

Transmission (dB)

Wavelength (nm)

*FIG. 16E*

EP 2 764 385 B1

FIG. 17

FIG. 18

25

## 190

FIG. 19

## 200

FIG. 20

FIG. 21A

FIG. 21B

FIG. 21C

FIG. 21D

FIG. 21E

FIG. 21F

START

220

221: PROVIDE A SEGMENT OF OPTICAL FIBER.

222: PROVIDE A HEATING UNIT INCLUDING A RESISTIVE HEATING ELEMENT THAT CREATES A LOCALIZED HEATING ZONE HAVING AN AXIAL LENGTH THAT IS SHORTER THAN THE SELECTED DEVICE PERIOD, WHEREIN THE HEATING ZONE CREATES A LOCALIZED, ROTATIONALLY ASYMMETRIC PERTURBATION IN THE SELECTED PORTION OF THE FIBER SEGMENT.

223: PROVIDE A FIBER MOUNT FOR THE FIBER SEGMENT, SUCH THAT A MOUNTED FIBER SEGMENT IS POSITIONABLE TO HAVE A SIDE SURFACE PROXIMATE TO THE RESISTIVE HEATING ELEMENT.

224: PROVIDE A TRANSLATION STAGE FOR AT LEAST ONE OF THE FIBER MOUNT AND THE HEATING ELEMENT, SUCH THAT THE SIDE SURFACE OF THE FIBER SEGMENT IS AXIALLY TRANSLATABLE RELATIVE TO THE HEATING ELEMENT.

225: POSITION THE FIBER SEGMENT WITH RESPECT TO THE RESISTIVE HEATING ELEMENT SUCH THAT A SELECTED PORTION OF THE FIBER SEGMENT IS LOCATED IN THE HEATING ZONE OF THE RESISTIVE HEATING ELEMENT.

226: RAISE THE TEMPERATURE OF THE RESISTIVE HEATING ELEMENT TO CAUSE A ROTATIONALLY ASYMMETRIC PERTURBATION IN THE SELECTED PORTION OF THE FIBER SEGMENT.

23

*FIG. 22*

START

<u>230</u>

231: REPEAT THE POSITIONING AND THE RAISING OF THE TEMPERATURE OF THE RESISTIVE HEATING ELEMENT FOR SUCCESSIVE SELECTED PORTIONS OF THE OPTICAL FIBER SEGMENT, SO AS TO WRITE A GRATING INTO THE OPTICAL FIBER SEGMENT, WHEREIN THE GRATING HAS AN INDEX CONTRAST VALUE HIGHER THAN A SELECTED OPTIMUM VALUE.

232: USE THE HEATING ELEMENT TO ANNEAL BOTH PERTURBED AND UNPERTURBED REGIONS OF THE FIBER SEGMENT SO AS TO REDUCE THE CONTRAST VALUE OF THE GRATING TO THE SELECTED OPTIMUM VALUE.

*FIG. 23*

**REFERENCES CITED IN THE DESCRIPTION**

**Patent documents cited in the description**

- US 61543973 B
- US 20080285907 A
- US 7486858 B
- US 7817258 B

**Non-patent literature cited in the description**

- Long-period grating fabricated by periodically tapering standard single-mode fiber. **LI-YANG SHAO et al.** APPLIED OPTICS. OPTICAL SOCIETY OF AMERICA, 01 April 2008, vol. 47, 1549-1552